**Europäisches Patentamt**

**European Patent Office**

**Office européen des brevets**

(19)

(11) Veröffentlichungsnummer : **0 427 018 B1**

(12) # EUROPÄISCHE PATENTSCHRIFT

(45) Veröffentlichungstag der Patentschrift :
**19.01.94 Patentblatt 94/03**

(51) Int. Cl.$^5$ : **G01P 5/12**

(21) Anmeldenummer : **90119887.9**

(22) Anmeldetag : **17.10.90**

(54) **Messvorrichtung zur Messung der Geschwindigkeit eines Fluids.**

Die Akte enthält technische Angaben, die nach dem Eingang der Anmeldung eingereicht wurden und die nicht in dieser Patentschrift enthalten sind.

(30) Priorität : **08.11.89 US 434867**

(43) Veröffentlichungstag der Anmeldung :
**15.05.91 Patentblatt 91/20**

(45) Bekanntmachung des Hinweises auf die Patenterteilung :
**19.01.94 Patentblatt 94/03**

(84) Benannte Vertragsstaaten :
**DE DK GB NL**

(56) Entgegenhaltungen :
**FR-A- 1 131 951**

(56) Entgegenhaltungen :
**GB-A- 1 488 012**
**US-A- 2 496 339**
**US-A- 3 490 283**
**US-A- 3 735 635**
**US-A- 4 727 751**
**PATENT ABSTRACTS OF JAPAN, Band 6, Nr. 168 (P-139)[1046], 2. September 1982; & JP-A-57 86 058**

(73) Patentinhaber : **Gust, Giselher R.**
**5108 Brittany Drive, South**
**906, St. Petersburg, Florida 33715 (US)**

(72) Erfinder : **Gust, Giselher R.**
**5108 Brittany Drive, South**
**906, St. Petersburg, Florida 33715 (US)**

(74) Vertreter : **Schupfner, Gerhard D. et al**
**Patentanwälte Müller, Schupfner & Gauger**
**Postfach 17 53**
**D-21236 Buchholz (DE)**

**Beschreibung**

Die Erfindung betrifft eine Meßvorrichtung zur Messung der Strömungsgeschwindigkeit in Flüssigkeitsströmungen, mit einem Körper, der rundherum in der Flüssigkeitsströmung angeordnet ist und der an seiner Oberfläche auf thermischen Prinzipien beruhende Meßmittel aufweist, wobei der Körper aus einem thermisch isolierenden Material besteht. Insbesondere betrifft sie eine Vorrichtung zur Ermittlung des Betrages der Geschwindigkeit und des zweidimensionalen Geschwindigkeitsvektors auch in aggressiven Flüssigkeiten, wie z. B. abreibenden Suspensionen, Slurries und hochkorrosiven Substanzen, wie sie typischerweise in geothermischen Quellen, Ölquellen oder hydrothermischen Quellen vorhanden sind.

Flüssigkeitsströmungen beinhalten turbulente, laminare, stetige oder die Richtung wechselnde Bewegungen. Um ihre Geschwindigkeit zu bestimmen, sind angemessene Größen und Zeitkonstanten der Instrumente zur Geschwindigkeitsmessung notwendig, damit die strömungsbezogenen Werte sowohl im Frequenzbereich als auch im Wellenzahlraum aufgelöst werden können. Im allgemeinen wird mehr als eine Geschwindigkeitssonde benötigt, um den Bereich der Zeitschwankungen in natürlichen Strömungen, wie sie in Flüssen, in meeresmeßtechnischen Anwendungen oder auch in ingenieurwissenschaftlichen Projekten auftreten, abzudecken.

In der Anwendung können dort Komplikationen auftreten, wo die Flüssigkeiten nicht so rein oder homogen sind, wie sie in hydrodynamischen Laborexperimenten erfahren werden. Stattdessen sind die Flüssigkeiten häufig Mehrphasensysteme, die aus Suspensionen kohäsiver, kohäsionsloser oder gemischter Sedimente von niedriger bis hoher Konzentration bestehen, die zusätzlich biologische Substanzen wie Bakterien und auch Gase enthalten können. Exudate und Trümmerteile können enthalten sein. Sogar Mixturen zwischen verschiedenen Flüssigkeiten oder zwischen Flüssigkeiten und einem Gas können vorhanden sein. Das Ergebnis ist, daß komplizierte Meßtechniken, die in Laborversuchen anwendbar sind, wie z. B. optische oder akustische Geschwindigkeitswandler, in der Praxis aufgrund ihrer mehrdeutigen Eicheigenschaften in heterogenen Flüssigkeits-Mixturen von organischen und anorganischen Substanzen nicht anwendbar sind. Auch haben diese Verfahren Schwierigkeiten, die Sonden und die zugehörige Elektronik am Meßort einzusetzen und Halterungen für sie anzubringen.

Mechanischer Abrieb und Korrosion der Instrumente durch die Flüssigkeiten führen bei den komplizierten Meßtechniken zu großen Problemen. Dies trifft insbesondere zu, wenn unter hohem Druck stehende, sehr heiße, chemisch aggressive Flüssigkeiten, wie z. B. Ausflüsse aus hydrothermischen und geothermischen Quellen (z. B. auf dem Meeresgrund) oder aus Ölquellen, untersucht werden sollen.

Aus der GB-A-1 488 012 ist eine Meßvorrichtung zur Geschwindigkeitsmessung in Fluiden bekannt, die einen walzenförmigen Körper aus thermisch isolierendem Material aufweist, der rundherum in einer Flüssigkeitsströmung angeordnet ist und der an seiner Oberfläche eine zentrale Wärmequelle und beiderseits auf Abstand von dieser zentralen Wärmequelle elektrische Temperaturmeßsonden aufweist, die sich in der Flüssigkeitsströmung abkühlen. Aus dem relativen Ausmaß der Abkühlung läßt sich die Geschwindigkeit und Richtung der Strömung ermitteln. Das Meßprinzip ist dabei der Einsatz einer Wärmequelle, die mit Wärmeempfängern zusammenarbeitet.

Aus der US-A-3 490 283 ist eine Geschwindigkeitsmeßvorrichtung für mehrfache Schallgeschwindigkeit in verdünnten Gasen bekannt. Die dreiarmige Konfiguration der Meßvorrichtung weist zwei plattenförmige Arme mit Anströmkanten auf. Hinter den Anströmkanten sind an jeweils einer Armoberfläche Temperaturmeßsensoren für Flachplattenmessungen vorgesehen. Zwischen diesen plattenförmigen Armen befindet sich ein zylindrischer Arm mit einer quer zur Strömungsrichtung verlaufenden Staufläche zur Staupunktmessung, einem Staupunkt-Wärmetransfer. Wie aus der Schrift zu entnehmen ist, weist die Meßvorrichtung über den plattenförmigen Armen für die kollidierenden Moleküle keine Strömungsgrenzschicht auf. Eine solche Grenzstromschicht darf für eine einwandfreie Funktion auch gar nicht auftreten. Die Vorrichtung arbeitet nur korrekt, wenn ihre Dimension auf die freie Weglänge der Moleküle abgestimmt ist und eine Quotientenbildung zwischen der Flachplattenmessung 8ST und der Staupunktmessung 8FP erfolgt. Die Anströmkanten dienen nur der vorderen Plattenbegrenzung. Die Vorrichtung ist in Flüssigkeiten nicht anwendbar, da es für Flüssigkeitsmoleküle, z. B. Wassermoleküle, keine freie mittlere Weglänge gibt und Wasser den Gesetzen der Kontinuum-Theorie für nicht kompressible Flüssigkeiten folgt.

Aus der USA 4 727 751 ist es bekannt, zur Messung von Oberflächentemperaturen, Oberflächenreibung, Übergangsturbulenzen und Turbulenz-Amplituden mehrere zum über Kreuzvergleich geschaltete Kreuzflußsensoren einzusetzen. Mehrere Sensoren sind dabei im gegenseitigen Abstand in einem bestimmten Muster auf einer glatten Flugzeug-Flügeloberfläche angebracht und messen Wärmeschwankungen und Oberflächenreibung einer Querströmung, die sich beim Auftreten der Luft auf die Flügelvorderkante ausbildet. Die Meßanordnung nach dieser Patentschrift ist für Geschwindigkeitsmessungen nicht tauglich. Die Sonden werden nämlich ausschließlich in einer Korrelations-Anordnung betrieben, die keinen Bezug auf eine Ausströmkante hat bzw. nimmt. Die Sensoren können in der beschriebenen Anordnung nie allein betrieben werden.

Es ist Aufgabe der Erfindung, ein Geschwindigkeitsmeßinstrument für Flüssigkeiten, wie Wasser, zu schaffen, das ein oder zweidimensionale Bewegungen mit angemessener räumlicher und zeitlicher Auflösung ermittelt, um die Momentangeschwindigkeit und den Geschwindigkeitsvektor auch in aggressiven oder suspensionsbehafteten Flüssigkeiten, wie z. B. hydrothermischen Quellen, Ölquellen, Slurries, schlammigen Fluiden und auch natürlichen Suspensionen, mit stetigen, unstetigen und oszillatorischen Zeitverläufen zu messen, wobei Ungenauigkeiten, eine geringe Lebensdauer und Verschmutzungen bzw. Korrosionen vermieden werden sollen, auch wenn die Flüssigkeiten unter hohen Drücken stehen, sowie eine hohe Temperatur, chemische oder mechanische Aggressivität oder sonstige die Messung erschwerende Beimengungen aufweisen.

Der Begriff "momentan" wird hier so definiert, daß kurzzeitige Mittelwerte von Signalen, deren Dauer vergleichbar oder kürzer ist als die Schwankungen in der Strömung, die mindestens 90% des turbulenten Frequenzspektrums der kinetischen Energie repräsentieren, gemeint sind.

Erfindungsgemäß wird die Aufgabe mit einer Vorrichtung mit den Merkmalen des Anspruches 1 gelöst.

Die weiteren Ansprüche geben vorteilhafte Ausgestaltungen der Erfindung wieder.

Bei der beanspruchten Meßvorrichtung wird die Wandscherspannung in einer Grenzschicht genutzt, die sich ab einer Kante entlang der Oberfläche eines Hindernisses, wie z.B. einer scharfkantigen kurzen, flachen Platte, entwickelt. Diese Nutzung erfolgt unter dem Gesichtspunkt, daß die Ausgangsspannung des nachfolgend als Sensorelement bezeichneten Scherspannungselementes auf dem Körper innerhalb der Grenzschicht ein eindeutiges Maß für die Anströmgeschwindigkeit $u_a$ der Flüssigkeit an der Anströmkante ist. Es wird also über die innerhalb der Grenzschicht gemessene Wandscherspannung die Anströmgeschwindigkeit der Flüssigkeit an der Anströmkante festgestellt.

Die Messung erfolgt auf der Oberfläche in Stromrichtung an einer relativ zu der Anströmkante festgelegten Position durch einen bündig aufgebrachten Hitzdraht- oder Heißfilmsensor oder einen Thermistor mit flacher Oberfläche, wobei bevorzugt Konstanttemperatur-Anemometrie benutzt wird. Die hier registrierte Wandscherspannung (wall shearing stress oder skin friction) ist eindeutig mit der Anströmgeschwindigkeit an der scharfen Kante durch fundamentale Wärmeübergangsgleichungen für turbulente und laminare Grenzschichten verknüpft.

Bei richtiger Ausbildung des Körpers und Anordnung des Wandscherspannungselements kann der Betrag des Geschwindigkeitsvektors in eindimensional gerichteten Strömungen bestimmt werden.

Zusätzlich angebrachte wärmemessende Sensoren, die um das Wandscherspannungelement herum angebracht werden, können dazu benutzt werden, die Richtung der Strömung anzuzeigen. Wenn sie mit den Geschwindigkeitsdaten kombiniert werden, kann der Geschwindigkeitsvektor für stetige, unstetige, ablösende und auch für oszillierende Strömungen in der Ebene der Oberfläche des Instrumentes bestimmt werden.

Der Wärmeverlust des Wandscherspannungelementes, welches (mindestens) um ein paar Grad Celsius über die Umgebungstemperatur aufgeheizt sein muß, ist der Stärke der Strömung proportional. Die Zuführung von Wärme durch die angeschlossene Heißfilm- oder ThermistorKonstanttemperaturelektronik erzeugt die auf die Strömungsgeschwindigkeit bezogene Ausgangsspannung.

Im folgenden wird die Erfindung anhand einer Zeichnung beschrieben, wobei

Fig. 1     eine perspektivische Darstellung des einfachen Flachplattenentwurfes der Vorrichtung mit Richtungssensoren entsprechend der Erfindung zeigt,

Fig. 2     eine Seitenansicht von zwei Meßsonden zeigt, die entsprechend der Fig. 1 gebaut wurden und in fest vorgegebenen Positionen durch verschiedene Wandhalterungen ohne (Fig. 2a) und mit (Fig. 2b) Richtungssensor montiert sind,

Fig. 3     die Seitenansicht einer Meßsonde mit runder Form zeigt, die die Messung der Strömungsgeschwindigkeit in allen Richtungen in der Ebene der Platte erlaubt,

Fig. 4     die Seitenansicht einer Sonde bei der der Wandscherspannungssensor und die zusätzlichen Richtungssensoren innerhalb einer kurzen Röhre so angebracht sind, daß in einer Richtung verlaufende, oszillierende und ihre Richtung umkehrende Strömungen gemessen werden können, zeigt,

Fig. 5     die Seitenansicht von zwei Meßvorrichtungen für alle Richtungen, wie sie in Fig. 3 gezeigt wurden und die auf einem Auslegearm angebracht sind, der um seine Zentralachse rotiert, zeigt,

Fig. 6     den Verlauf einer typischen Eichkurve für den Betrag der Geschwindigkeit in einer Richtung zeigt, der mit der Sonde der Zeichnung 1, die mit einem Konstanttemperaturanemometer verbunden war, aufgenommen wurde, und

Fig. 7     den Verlauf des Energiedichtespektrums zeigt, das aus der mit dem Scherspannungssensor der Fig. 1 gemessenen Meßreihe einer Strömung mit nur einer Richtung in einer wandbegrenzten Scherströmung errechnet wurde.

Die Vorrichtung besteht aus einer Platte (oder einer anderen Hindernisanordnung) mit einer scharfen Frontkante, die in dem Weg der Strömung befestigt ist, wobei die Frontkante der Platte dem ankommenden Fluid entgegengestellt ist. Diese Anströmkante verursacht die Entwicklung einer Grenzschicht in Richtung der Strömung über die Oberfläche der Platte. Die relevanten Grenzschichtparameter sind das Ergebnis der Anströmgeschwindigkeit sowie der Geometrie und Ausrichtung der Platte.

Da die meisten der letzteren Parameter durch die Dimensionen der Hindernisoberfläche und die fixierte Position des Scherspannungselementes bestimmt werden, verbleibt ein variabler Parameter, der eindeutig mit der Hydrodynamik der Grenzschicht verknüpft ist (und in Richtung der Strömung mit der Entfernung von der Frontkante sich verändert); dies ist die Wandscherspannung.

Wenn ein Scherspannungselement in einem vorgegebenen Abstand $\Delta x$ stromabwärts von der Anströmkante positioniert ist, dann ist die Ausgangsspannung des Sensorelementes eindeutig auf die Anströmgeschwindig- keit $u_a$ für das vorgegebene Fluid bezogen.

Die Messung der Wandscherspannung erfolgt mittels Konstanttemperatur-Anemometrie-Elektronik in Verbindung mit dem Scherspannungselement. Der Sensor als Teil einer Wheatstone-Brücke mit Rückkopplung wird auf eine erhöhte Temperatur erwärmt, und da die Wandscherspannung an der Position der Sonde mit ansteigender Strömung ansteigt, vergrößert sich auch der Betrag an Wärme der von der Sonde forttransportiert wird, worauf die Elektronik mehr elektrischen Strom bereit stellt, um die erhöhte Temperatur des Sensors beizubehalten, die durch das Sondenüberhitzungsverhältnis ursprünglich festgelegt worden ist.

Der Brückenstrom und demzufolge die Ausgangsspannung der Elektronik reagieren somit auf die Wandscherspannung in der Grenzschicht, die wiederum von der Anströmgeschwindigkeit der Plattenvorderkante abhängt. Die Geschwindigkeit in dem strömenden Fluid kann daher mathematisch (und bestätigt durch experimentelle Eichungen) durch Gleichungen, die in der Hydrodynamik bekannt sind, beschrieben werden. Die Grenzschicht, die sich von der Anströmkante der Platte entwickelt, muß nicht die einer im Raum festgehaltenen Platte sein. Obwohl dies meistens der Fall sein wird, sind Anwendungen möglich, wo Bewegungen des Körpers (z. B. linear oder rotierend) und des Fluides vektoriell überlagert sein können, und dadurch eine zusammengesetzte Relativgeschwindigkeit in einer Anzahl von Bewegungsrichtungen erzeugen, die anschließend durch angemessene Software analysiert werden können.

In solchen Fällen wird die Anströmkante den Umfang der Platte umlaufen und die Kante-Sensor Distanz $\Delta x$ kann variieren (außer für den Fall von Axialsymmetrie).

Weiterhin braucht die Geometrie der Meßsonde nicht die einer einfachen flachen Platte zu sein. Grenzschichten, die sich von den Anströmkanten entlang der Außenseite von (stromlinienförmigen) Körpern entwickeln, oder auch an der Innenseite von Röhren, Leitungen oder anderen hohlen durchströmten Geometrien entwickeln, können benutzt werden, solange die sich entwickelnde Grenzschicht durch eine Wandfläche (an seiner Unterkante) und eine Zentralströmung (an seiner Oberkante) am Ort des Scherspannungselementes begrenzt ist.

Das bedeutet, daß das Meßprinzip solange gültig ist, wie die sich am Ort des Scherspannungselementes entwickelnde Grenzschicht in der Longitudinalachse hohler Geometrien oder entlang der Oberfäche eines Meßinstruments, das in der Nähe einer Wand positioniert ist, sich noch nicht mit der Grenzschicht vereinigt hat, die sich gleichzeitig an der gegenüberliegenden Wandfläche entwickelt, und somit eine vollentwickelte Rohr- oder Kanal-Grenzschicht am Ort der Meßsonde gebildet hat.

Bei der Beschreibung des Instrumentes wird die Betonung nicht auf den Betrieb der Konstant-Temperatur-Heißfilm (bzw. - Hitzdraht) oder der Thermistor-Anemometrie gelegt, die Bestandteil des heutigen Wissens auch für Anwendungen mit Kompensation thermischer Fluid-Fluktuationen ist. Die hier präsentierten Meßsonden funktionieren in diesem Sinne auch mit Konstantstrom-Anemometern. Einige Einzelheiten sind jedoch besonders hervorzuheben :

0. das Wandscherspannungs-Sondenelement muß eine ausreichende elektrische Isolierung gegenüber leitenden Flüssigkeiten haben,

1. es sollte bevorzugt ein Material mit niedriger thermischer Leitfähigkeit für die Trägerplatte gewählt werden,

2. die Anemometer-Elektronik sollte unter Umständen auch die Temperaturkompensation für Strömungen mit variierender Temperatur ermöglichen,

3. thermische Interferenzeffekte, die dann auftreten, wenn eine Wärmequelle (die Sonde) in einer Wand eingefügt wird, wie sie für Messungen der Wandscherspannung in Grenzschichtströmungen beobachtet werden, werden minimal sein, können aber je nach zeitlichem Verlauf der Temperatur in der Strömung auftreten,

4. für Wasserströmungen können exponentielle Eichkoeffizienten, die von laminaren Kalibrierkurven der Scherspannungselemente abgeleitet werden, dazu benutzt werden (mit einem angemessenen Fehler von $\leqq 5\ \%$), die momentane turbulente Wandscherspannung zu berechnen, obwohl die schützende Epoxydharzisolierung an der Sondenoberfläche das Frequenzverhalten des Sondenelements beeinflußt und dritte und vierte Momente der Strömung nicht richtig gemessen werden können. Die gemessenen Wandscherspannungs-Meßreihen wiederum ermöglichen das Zeitverhalten der Anströmgeschwindigkeit ua an der Frontkante festzustellen.

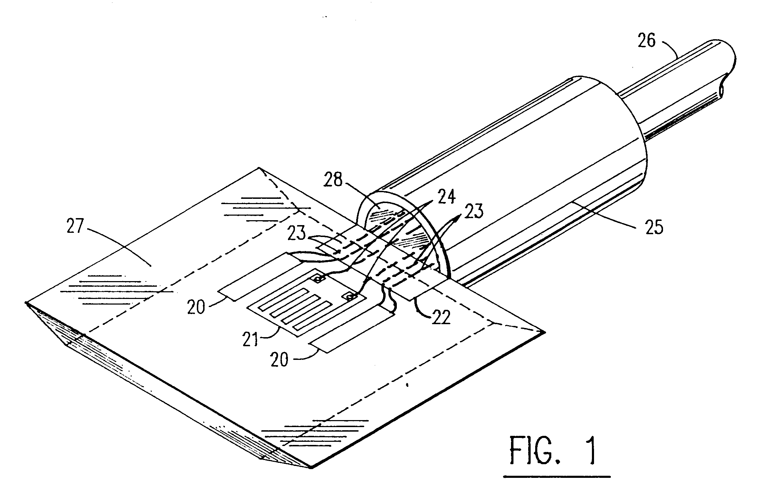

Die Meßsonde, die in Fig. 1 dargestellt wird, besteht aus einer dünnen rechteckigen Schneide mit angeschrägten Kanten 27 und einem epoxydversiegelten Heißfilmelement 21, welches auf der Oberfläche angebracht ist, von der sich die angeschrägte Kante nach unten verjüngt. Die Anschlußdrähte 24 des Sensorelementes sind innerhalb einer kleinen eingefrästen Vertiefung 22 versiegelt und werden an ein entsprechendes (Unterwasser) Kabel 26 innerhalb eines Schaftes 25 angelötet, welcher anschließend mit Epoxyd 28 versiegelt wird und gleichzeitig Halterungszwecken dient.

Das Kabel 26 führt zu der Sondenelektronik, die an einem anderen Platz untergebracht ist (z. B. in einem Druckgehäuse bei der wirklichen Anwendung). Um die Geschwindigkeit in einer eindimensionalen Strömung (die durch den Pfeil in der Figur festgelegt ist) zu messen, ist es nur notwendig, das Heißfilmelement zu aktivieren, das über das Kabel 26 mit der Anemometer-Elektronik verbunden ist. Der Betrag der Strömung wird mittels der Wärmemenge, die von der geheizten Sondenoberfläche entfernt (und wieder zugeführt) wird, in der folgenden Weise gemessen : Die durch erzwungene Konvektion von der Sondenoberfläche in die Flüssigkeit transferierte Wärmemenge ergibt die Wandscherspannung basierend auf Gleichung (1) an der Position des Heißfilmelementes 21, die in Strömungsrichtung der sich entwickelnden Wandgrenzschicht im Abstand $\Delta x$ von der Anströmkante entfernt angebracht ist. Die Wärmemenge ist eindeutig mit der Anströmgeschwindigkeit $u_a$ an der Anströmkante mittels Gleichung (2) für turbulente und Gleichung (3) für laminare Strömungen verknüpft:

$$(1) \qquad \tau^{1/3} = (QLW/k\Delta T_0)(a^{1/3}WL^{2/3})^{-1}(\mu v/\sigma)^{1/3}$$
$$(2) \qquad u_a = 7.15(\tau/\rho)^{0.5556}(\Delta x/v)^{0.1111} \text{ (turbulente Strömung)}$$
$$(3) \qquad u_a = 0.4698\tau^{0.3333} [(\tau\Delta x)/(\mu\rho)]^{0.3333} \text{ (laminare Strömung)}$$

wobei

| | |
|---|---|
| a | eine Konstante für einen vorgegebenen Temperaturgradienten und Strömungstyp ist, |
| L, W | die effektive Länge und Breite des Scherspanungselementes sind, |
| Q | der Wärmefluß ist, |
| K | die thermische Leitfähigkeit ist, |
| $\mu$ | die dynamische Viskosität ist, |
| $v$ | die kinematische Viskosität ist, |
| $\sigma$ | die Prandtl-Zahl ist |
| $\tau$ | die Wandscherspannung ist, |
| $\rho$ | die Dichte der Flüssigkeit ist, |
| $\Delta x$ | der Abstand zwischen Kante und Sensor ist, und |
| $\Delta T_0$ | der Temperaturgradient ist, der durch das Überhitzungsverhältnis vorgegeben wird. |

Die Entscheidung entweder die laminare oder die turbulente Strömungsgleichung zu benutzen, um die Anströmgeschwindigkeit über die Eichkoeffizienten aus den Anemometer-Ausgangssignalen zu berechnen, wird visuell oder computerüberwacht aus der Art der Ausgabesignale gefällt, die sich deutlich für laminare und turbulente Strömungen unterscheiden und/oder durch die Abschätzung der Reynolds-Zahl der Strömung.

Wenn Vektor- oder zweidimensionale Messungen erwünscht sind, müssen wärmeempfindliche Elemente 20 wie temperaturabhängige Widerstände (oder Thermoelemente) um das Heißfilmelement 21 herum angebracht werden. Änderungen in den Ausgangssignalen dieser Detektoren treten dann auf, wenn die vom Element 21 erzeugte Wärmefahne einen Temperaturindikator 20 erreicht, der über Verbindungskabel 23 und Mehrleiterkabel 26 mit der Verarbeitungselektronik (nicht gezeigt) verbunden ist. Durch ein Computerprogramm, welches in Anti-Koinzidenz-Schaltung die thermischen Sensoren 20 auf jeweils 180° gegenüberliegenden Seiten des Elementes 21 gleichzeitig analysiert, für eingesetzte Richtungs-Paare wird die Richtung der Strömung für jeden Zeitabschnitt in den durch die Zahl der Sondenelemente 20 vorgegebenen Richtungselementen bestimmt.

Die Sonde kann in jeder beliebigen Orientierung relativ zur Strömung eingesetzt werden, sogar auf dem Kopf stehend, und falls sie nicht mit der Strömung ausgerichtet ist, mißt das Sondenelement 21 jene Grenzschicht-Strömungskomponente des Fluids, die tangential in der Ebene der Oberfläche entlang strömt. Für besondere Anwendungen mit langsam variierenden (z. B. tidalen) oder niedrigen (z. B. im Hypolimnion) Strömungen mag es vorteilhaft sein, das Sondenelement auf einer Richtungsfahne (mit Anströmkante) anzubringen, Meßsonden jeweils an dem Ende eines um seine zentrale Achse rotierenden Armes anzubringen, oder mehrere Sondenelemente 21 mit verschiedenen Abständen von der Anströmkante eines ruhenden oder bewegten Elementes 27 anzubringen.

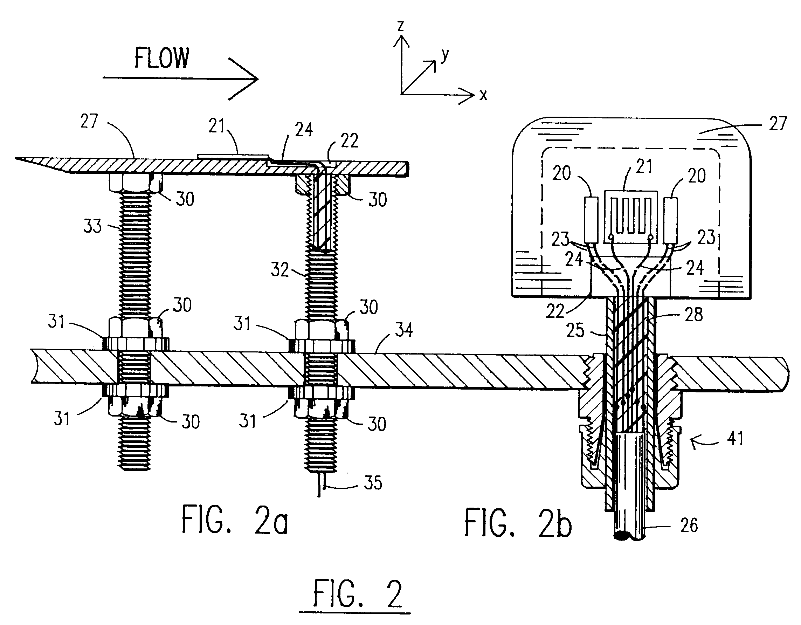

Fig. 2 demonstriert in Seitenansicht Beispiele, wie die Geschwindigkeitssonden in einer Wand 34 angebracht werden können. In Fig. 2a mißt die Sonde den Betrag der Geschwindigkeit in der XY-Ebene und die Befestigungsplatte, die das Sondenelement 21 enthält, ist an seinem Platz durch mehrere Gewindestäbe 32, 33, deren Länge die Einsatzhöhe der Meßsonde bestimmt, fixiert. Die Gewindestangen 32, 33 sind an der Rückseite der Platte 27 durch aufgeklebte Schraubmuttern 30 befestigt. Die Zuführungen 24 des Sondenelements sind an dünne flexible isolierte Drahtpaare 35 angelötet und werden durch eine (später mit Epoxyd verfüllte) Vertiefung 22 auf der Platte 27 zu dem hohlen Gewindestab 32 geführt, durch welchen das Kabel dann zu der Konstanttemperatur-Anemometer-Elektronik führt, die anderweitig untergebracht ist. Abdichtende Unterlegscheiben 31 unterhalb der Muttern 30 verhindern Austreten des Fluids an den Gewindestiftwandlöchern. In Fig. 2b mißt das Gerät den Geschwindigkeitsvektor der Vor- und Rückbewegung in der XZ-Ebene, indem Thermoelemente 20 unmittelbar vor und hinter dem Scherspannungselement angebracht sind. Die Oberflächenplatte der Meßsonde 27 endet in einem Schaft 25 aus dünnem Epoxyd-Rohr, welcher zwei Aufgaben erfüllt: erstens entspricht sein äußerer Durchmesser dem inneren Durchmesser einer Kompressionsdurchführung 41, welche in die Wand 34 eingeschraubt ist, durch die die Sonde in der gewünschten Meßhöhe fixiert werden kann; und zweitens werden die Zuführungskabel für das Sensorelement 24 für die Thermoelemente 23 durch eine versiegelte Vertiefung 22 von der Unterstützungsplatte 27 direkt in den hohlen Schaft 25 geführt, der mit Epoxyd 28 verfüllt wird, nachdem die Kabel mit dem Mehrleiter-Unterwasserkabel 26 zusammengelötet wurden.

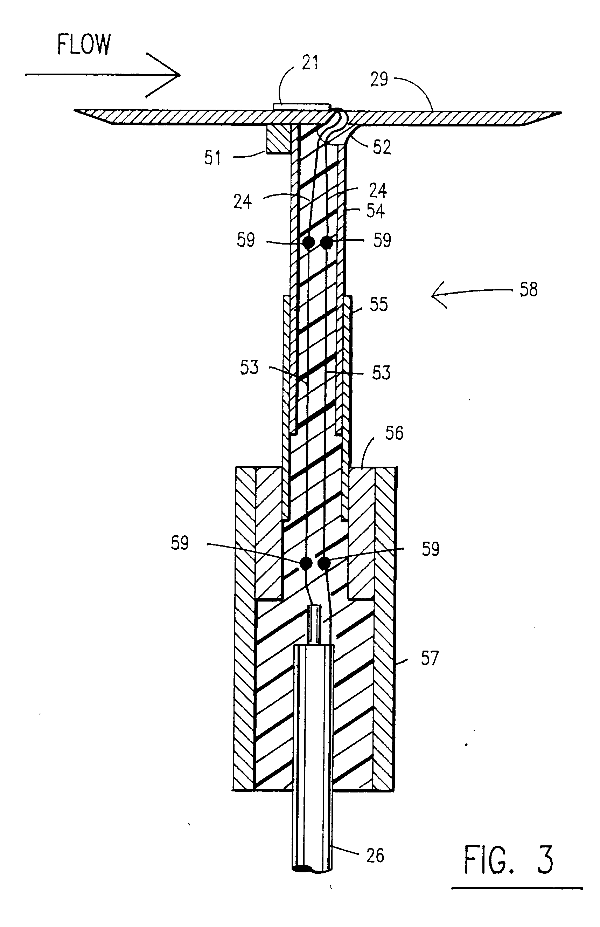

In Fig. 3 besteht die Meßsonde aus einer runden Platte 29 mit angeschrägter Kante, die von der Oberfläche, auf welcher das Scherspannungselement 21 aufgebracht ist sich nach unten hin verjüngt. In dieser Weise ist der Abstand $\Delta x$ zwischen der Kante und dem Scherspannungselement 21 der gleiche für alle Anströmrichtungen. Die Grenzschicht, die sich über der Platte entwickelt, ist dann die gleiche für Strömungen von jeder beliebigen horizontalen Richtung bei horizontaler Plattenausrichtung. Das Geschwindigkeitssignal, welches mittels des Sensorelementes 21 erzeugt wird, hat richtungsunabhängige Eichcharakteristiken, und ist daher gleich für Geschwindigkeitsvektoren in der Ebene der Platte 29.

Die Zuführungen 24 von dem Sondenelement werden durch kleine, später versiegelte Löcher in die Zentralschaft-Einheit 58 eingeführt, wo sie mittels Lötverbindungen 59 mit dünnen, verwirbelten PVC-isolierten Zuführungskabeln 53 verbunden werden.

Diese Zentralschafteinheit 58 besteht aus ineinander geschobenen hohlen Rohren 54, 55, 56, 57 aus dem gleichen Material wie die runde Platte (hier wärmewiderstandsfähiges Epoxyd Röhrenmaterial Typ G-10), welches während der Herstellung schrittweise mit Epoxyd-Harz gefüllt wird. Die dünnste Röhre wird mit Epoxyd an der Rückseite der runden Platte 29 angeklebt und mit einem segmentierten Kragen 51 versehen, der zusätzliche mechanische Stabilität gibt, und mit einer Extrusion von ausgehärtetem Epoxyd 52 versehen ist, welches den Kragen 51 versiegelt, nachdem die Sensorkabel an die Verbindungskabel 53 angelötet worden sind. Dieser Entwurf reduziert Staueffekte der Strömung in der Umgebung der Platte.

Der Schaft vergrößert anschließend seinen Durchmesser in Richtung des Schaftendes, wo die Zuführungskabel 53 an das Kabel 26 angelötet sind, welches die Verbindung zu der Elektronik herstellt. Das Kabel 26 ist entweder Unterwasserkabel oder Koaxialkabel, das mit einer zusätzlichen Schicht von Schrumpfschlauch umhüllt ist.

Kabel mit anderen Materialien sind für Anwendungen, die besondere chemische oder Wärmeresistenz erfordern, vorteilhaft. Jedoch muß ihre Impedanz Oszillationen der Anemometer-Elektronik verhindern.

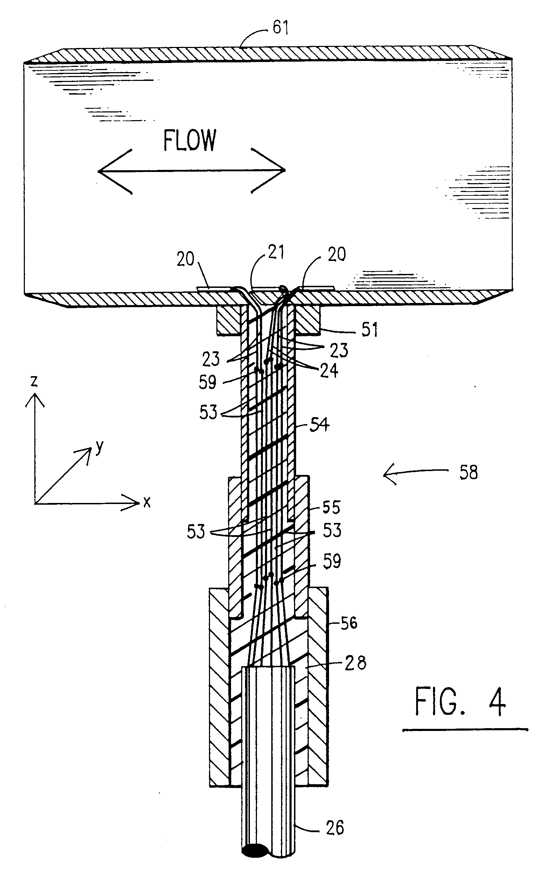

In Fig. 4 werden Grenzschichten an der Innenseite und der Außenseite von den angeschrägten Kanten einer dünnwandigen Röhre 61 mit Durchmesser d und Länge 1 erzeugt. Diese Geometrie repräsentiert eine flache Platte, die in eine Kreisform gebogen wurde. Wird z. B. die innere Oberfläche benutzt, ist das Scherspannungselement 21 in der Weise angebracht, das die gleiche Distanz $\Delta x$ von beiden Außenrändern der Röhre 61 vorliegt. Diese Entfernung ist kurz genug, um die axialsymmetrische Grenzschicht nicht zu einer Höhe >d/2, dem halben Rohrdurchmesser, wachsen zu lassen, so daß sie in der Zentralachse nicht zusammenfällt. Falls dies passiert, entsteht eine vollentwickelte Rohrströmung, und das Scherspannungselement mißt in einer druckgetriebenen Rohrströmung die Wandscherspannung, die nicht eindeutig mit der Anströmgeschwindigkeit $u_a$ an der Anströmkante verknüpft sein muß.

Neben dem Scherspannungselement 21 sind in Stromrichtung und gegen Stromrichtung wärmemessende Elemente 20 angebracht, die es ermöglichen, zwischen Vorwärts- und Rückwärtsrichtung von intermittierenden, oszillierenden oder ihre Richtung umkehrenden Strömungen in der Röhre zu unterscheiden. Ihre Zuleitungen 23 sind ebenso wie die des Scherspannungselementes 24 in die hohle Schafteinheit 58 eingebracht, die einen variablen Durchmesser hat, und in der die Zuführung der Sondenelemente mit Paaren von dünnen flexiblen PVC-isolierten Kabeln 53 verbunden werden, welche wiederum an ein Mehrfachkabel 26 angelötet werden, das zu dem nicht gezeigten Elektronikgehäuse führt.

Der Schaft wird anschließend mit Epoxyd 28 verfüllt und unter Vakuum ausgehärtet, damit eine angemessene Entgasung stattfindet, um druckbeständige Versiegelungen für elektrische Leitungen und Lötverbinden 59 zu erhalten.

Alle in den Fig. 1 bis 5 gezeigten Sensoren sind in Tiefseeumgebung bis zu 703 Kg/cm$^2$ (10.000 psi) ein-

setzbar, wobei die Anemometer-Elektronik und die digitalen Datenrekorder als kommerzielle Produkte in autarken Druckgehäusen untergebracht sind.

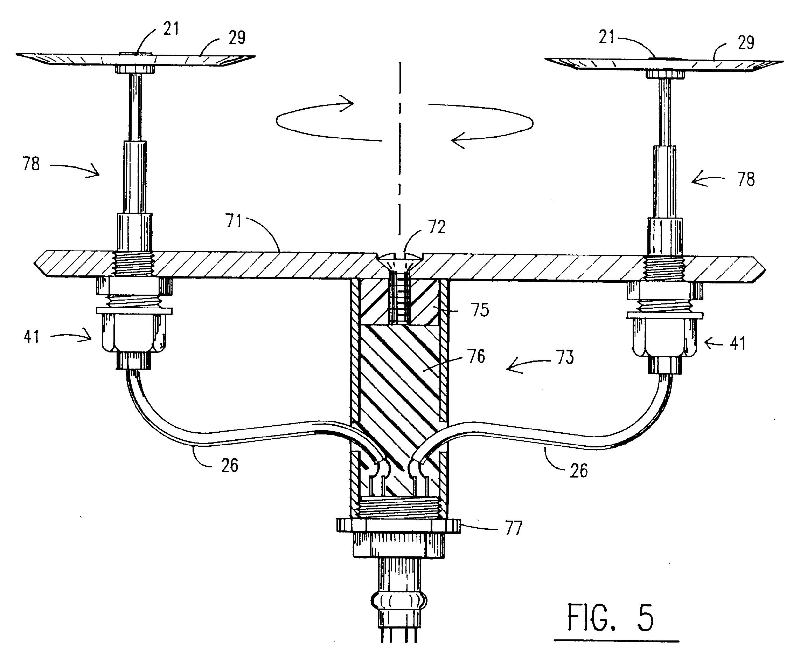

Die in Fig. 5 gezeigten Einheiten benutzen zwei richtungsunabhängige Sonden wie sie in Fig. 3 gezeigt sind. Sie sind mittels Druckdichtungen 41 an den Enden eines stromlinienförmigen Verbindungsstabes 71 montiert, der um seine Vertikalachse rotieren kann. Eine kurze, vertikale Schafteinheit 73 ist mittels einer Schraube 72 im Zentrum dieses Distanzarmes befestigt. Die Schafteinheit 73 besteht aus einem Epoxyd-Stecker 75 mit zentralem Gewindeloch, einer Epoxyd-Röhre 74 und endet in einem Unterwasser-Stecker 77 mit vier Kontakten. Stecker 77 stellt die mechanische und elektrische Verbindung zu einem versiegelten Drehschaft mit Kontaktbuchse her, welcher aus einem Druckgehäuse für praktische Anwendungen oder aus einer Wandbefestigungs- Einheit herausragt, die eine notwendige Elektronik, Motor, Kontaktschleifringe, Mikroprozessor, Datenaufzeichnungs-Einheit und Datenspeicher enthält. Letztere Einheiten sowie der Rahmen, in dem sie für die prakti- sche Anwendungen montiert werden, sind hier nicht gezeigt, da sie bekannte Technologien darstellen.

Für Laboranwendungen wird der Schaft durch eine Öffnung in der Wand eingeführt, wobei gängige Versiegelungstechniken benutzt werden. Das Rotieren der Schaftein- heit 72 mit konstanter Winkelgeschwindigkeit $\Omega$ erzeugt für beide Meßvorrichtungen 78 die gleichen konstanten Ausgangssignale, repräsentativ für die vorgegebene Winkelgeschwindigkeit, sofern keine Strömung überlagert ist.

Bei einer überlagernden Strömung werden beide Ausgangssignale moduliert, da die Geschwindigkeiten sich vektoriell addieren und eine neue Phasenbeziehung zwischen den Ausgangssignalen beider Meßvorrichtungen entsteht. Wechsel in der Richtung der Strömung resultieren in wechselnder Phase der Ausgangssignale, während Änderungen des Betrages der Geschwindigkeit die Amplitude der Ausgangssignale beeinflussen. Die Frequenz des kombinierten Ausgangssignales der Geschwindigkeitsmeßsonde 78 ist durch die Winkelgeschwindigkeit des Verbindungsstabes 71 bestimmt. Das Gerät das in Fig. 5 dargestellt ist, ist besonders für die Messung sehr niedriger Geschwindigkeiten und von Transienten geeignet. Die wassergeschützten elektrischen Kabel 26 der zwei richtungsunabhängigen Meßvorrichtungen 78 werden von den Schäften zu dem Unterwasserstecker 77 durch Löcher in dem anfänglich hohlen Zentralschaft geführt, welcher anschließend mit Epoxyd 76 gefüllt wird, nachdem die Lötverbindungen zwischen den Drähten und Stiften hergestellt worden sind. Zukünftige Anwendungen werden mit einer modifizierten Version dieser Einheit erwartet, bei der nur eine im Abstand $\Delta r$ um die vertikale Achse rotierenden Sonde mit festgelegter Winkelgeschwindigkeit benutzt wird.

Je nach Anwendungsart sind verschiedene Materialien und Formen der Sensorplatte wählbar, von deren Anströmkante oder Anströmumfang sich die Grenzschicht entwickelt.

Was den Einsatzbereich betrifft, sind Geschwindigkeits- Messungen nach Fig. 1 bis 4 bisher in Luftströmungen, Wasserströmungen im Labor sowie in Suspensionsströmungen von kohäsiven und kohäsionslosen Sedimenten mit Konzentrationen bis zu 130 g/l sowie im Feld in Tiefen bis 5.000 m und auch in flachen Meeresströmungen durchgeführt worden.

Sensoren und Materialien, die in diesen Entwürfen benutzt werden,sind bisher bis zu 703 Kg/cm² (10.000 psi)druckgetestet worden und widerstehen Temperaturen bis zu 250 C°, was ihre Anwendung in Fluiden, die bis zu 200 C° heiß sind, erlaubt. Temperaturen bis zu 350 C° treten in bestimmten Typen von hydrothermischen Quellen auf; für die Messung deren Austrittsgeschwindigkeiten sind Materialien, wie Sensorelemente, Grenzschicht erzeugende Plattenoberflächen, sensorkabel, Unterwasserkabel und Versiegelungsmaterialien mit Temperaturtoleranzen bis zu 550 C° kommerziell vorhanden.

Es ist jedoch zu beachten, daß das Druckgehäuse mit der Elektronik und dem Datenaufzeichnungsgerät in einer kühleren Umgebung plaziert werden muß, was durch die Anwendung heutzutage üblicher Technologien möglich ist.

Eine andere Anwendung benutzt die Tatsache, daß für heterogene Fluidmixturen wie z. B. Öl-Wasser oder Öl-Wasser-Gas, die Ausgangssignale der Wandscherspannungs-Sonden Informationen enthalten, welche die Bestimmung der Volumina der einzelnen vorhandenen Fluidkomponenten der Mixturen erlauben.

Dies ist möglich, wenn für die gleiche Geschwindigkeit die thermische Konduktivität, die ein wesentlicher Teil der fundamentalen Wärmeübergangsgleichung ist, sich für die koexistierenden Fluide unterscheidet. Änderungen in der Art und Amplitude des Anemometer-Ausgangssignales sind das Ergebnis, von welchem die Volumen-Verhältnisse bestimmt werden können.

Die oben beschriebenen Meßgeräte funktionieren nur solange als Geschwindigkeitssensor, wie das Sensorelement in einer Position angebracht ist, an der die Grenzschicht sich von einer Anströmkante entwickelt hat. Das bedeutet z. B. für den Fall, daß das kurze Rohr aus Fig. 4 mit einer modifizierten Schaftaufhängung in einen Ausströmkanal von nahezu gleichem Durchmesser angebracht ist, in dem bereits ein vollentwickeltes Geschwindigkeitsprofil und Flüssigkeitsaustrittsvolumen existiert, daß die Meßsonde dann die Wandscherspannung bezogen auf die vorhandene Strömung mißt. Die Ursache liegt daran, daß die Meßsonde Bestandteil der Umgebung geworden ist, und keine Anströmkante mehr in der Strömung steht, um eine neue Grenzschicht-Entwicklung hervorzurufen. Ebenso mißt ein auf einer flachen Platte aufgebrachtes Sondenelement die Anströmgeschwindigkeit $u_a$ nur dann, wenn erstere nicht bündig auf der Strömungswandbegrenzung ruht (punktweise Unterstützung ist erlaubt). Das Fluid muß unterhalb und oberhalb der Platte frei vorbeiströmen können. Die verbleibende Tiefe der Strömung an den Meßort (relativ zur Platte) muß ebenfalls beachtet werden, damit die Sonde angemessen funktioniert (mögliche Beschleunigungseffekte). Die Obergrenze der Grenzschicht, die sich von der Anströmkante der Platte entwickelt, darf nicht mit nahe der Platte angebrachten Hindernissen wechselwirken oder von ihnen beeinflußt werden.

Funktionsprinzipien und Eichungen des Meßgerätes werden jedoch nicht beeinflußt, wenn die Achse des Körpers, welche das Scherspannungselement enthält, in einer beliebigen gewünschten Ebene im Raum orientiert ist, solange sie in der Strömungsrichtung liegt (wie Beispiele von Fig. 2), störende Grenzschichten von anderen Oberflächen nicht vorhanden sind oder die Scherspannung am Meßort auf der Oberfläche eindeutig über Grenzschichtgleichungen mit der Geschwindigkeit an der Anströmkante verknüpft ist.

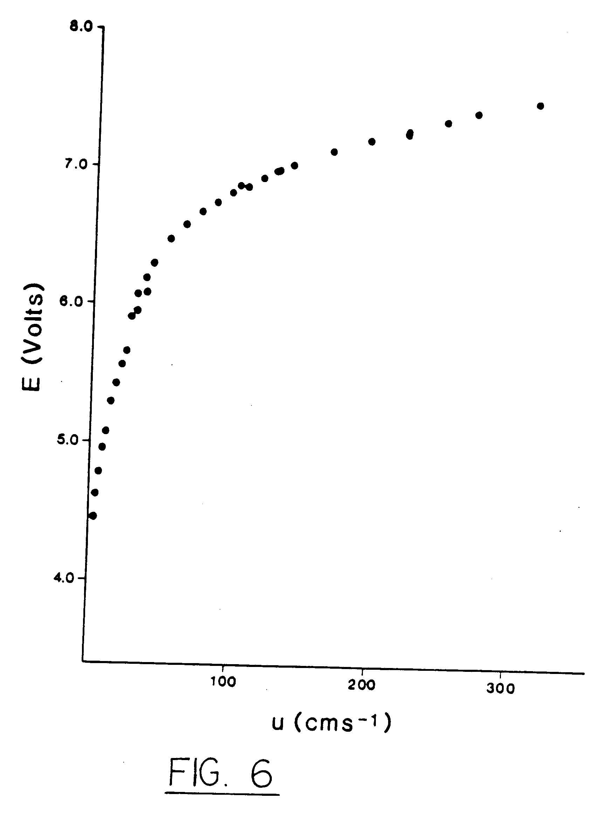

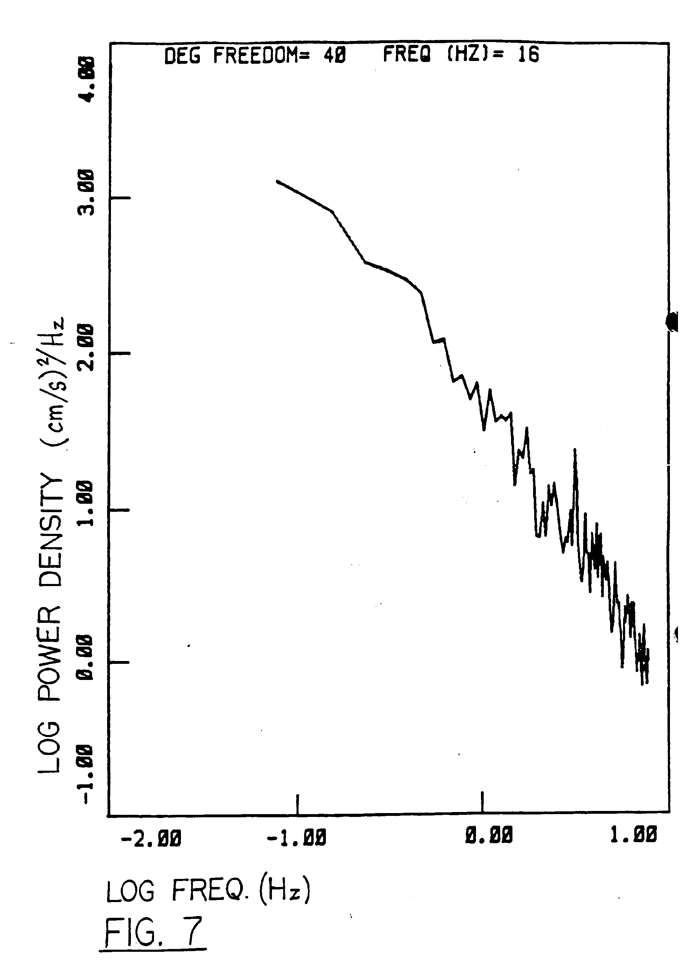

Fig. 6 zeigt eine typische Eichkurve für den Betrag der Geschwindigkeit in einer gerichteten Wasserströmung, während Fig. 7 ein turbulentes Energiespektrum darstellt, das von einer Geschwindigkeitsmeßreihe berechnet worden ist, die in einer wandbegrenzten Scherströmung mit einer Meßsonde des Typs wie in Fig. 2b gemessen worden ist, die an ein Konstanttemperatur-Anemometer angeschlossen ist.

## Patentansprüche

1. Meßvorrichtung zur Messung der Strömungsgeschwindigkeit in Flüssigkeitsströmungen, mit einem Körper, der rundherum in der Flüssigkeitsströmung angeordnet ist und der an seiner Oberfläche auf thermischen Prinzipien beruhende Meßmittel aufweist, wobei der Körper aus einem thermisch isolierenden Material besteht, dadurch gekennzeichnet, daß
   - der hydraulisch glatte Körper mit einer scharfen Anströmkante versehen ist,
   - der Körper so ausgebildet ist, daß sich ab der Anströmkante eine Grenzschicht entwickelt,
   - ein Sensorelement (21) zur Messung der Wandscherspannung in der Grenzschicht nach dem Anemometerprinzip, das auf dem Körper (27), bündig mit dessen Oberfläche abschließend, mit definiertem Abstand von der Anströmkante innerhalb der Grenzschicht befestigt ist, und
   - das Sensorelement (21) mit einer Sondenelektronik verbunden ist, die zur Ermittlung der Geschwindigkeit der Strömung an der Anströmkante aus dem Sensorsignal anhand bekannter fundamentaler hydrodynamischer und Wärmeübergangs-Gleichungen zur Beschreibung der Grenzschichtströmung am Meßort unter Berücksichtigung des definierten Abstandes ausgebildet ist.

2. Meßvorrichtung nach Anspruch 1, dadurch gekennzeichnet, daß das Sensorelement (21) in definiertem Abstand von der scharfen Anströmkante auf einer ab der scharfen Anströmkante her flachen Oberfläche des Körpers angeordnet ist, wobei die andere Oberfläche über eine angeschrägte Verjüngung an die scharfe Anstömkante herangeführt ist.

3. Meßvorrichtung nach Anspruch 1, gekennzeichnet durch eine Anzahl von Temperatur-Sensorelementen (20), die um das Sensorelement (21) herum auf dem Körper (27) bündig mit dessen Oberfläche abschließend innerhalb der thermischen Fahne des erwärmten Sensorelementes (21) angeordnet sind.

4. Meßvorrichtung nach einem der vorangehenden Ansprüche, dadurch gekennzeichnet, daß die Meßsonde mittels Zuführungen (24) mit einer Brückenschaltung solcher Art verbunden ist, daß die Temperatur des Sensorelementes (21) konstant gehalten werden kann.

5. Meßvorrichtung nach einem der vorangehenden Ansprüche, dadurch gekennzeichnet, daß die Meßsonde mittels Zuführungen (24) mit einer Brückenschaltung solcher Art verbunden ist, daß der elektrische Strom durch das Sensorelement (21) konstant gehalten werden kann.

6. Meßvorrichtung nach einem der vorangehenden Ansprüche, dadurch gekennzeichnet, daß der Körper (27) die Form einer rechteckigen Platte besitzt.

7. Meßvorrichtung nach Anspruch 1, dadurch gekennzeichnet, daß der Körper (27) die Form einer runden Platte besitzt.

8. Meßvorrichtung nach Anspruch 1, dadurch gekennzeichnet, daß der Körper (27) die Form eines stromlinienförmigen Körpers mit einer Anströmkante in der Richtung der anströmenden Flüssigkeit besitzt.

9. Meßvorrichtung nach Anspruch 1, <u>dadurch gekennzeichnet</u>, daß die Grenzschicht sich von einer Anströmkante innerhalb einer hohlen Geometrie, beispielsweise in runden oder viereckigen Röhren, entwickelt.

10. Meßvorrichtung nach einem der vorangehenden Ansprüche, <u>dadurch gekennzeichnet</u>, daß die Meßvorrichtung sich relativ zur Strömungsgeschwindigkeit in einem bekannten Weg- und Zeitmuster bewegt.

11. Meßvorrichtung nach Anspruch 10, <u>dadurch gekennzeichnet</u>, daß die Meßvorrichtung mit bekannter Winkelgeschwindigkeit mit einem Abstand $\Delta r$ um eine Zentralachse rotiert.

12. Meßvorrichtung nach Anspruch 11, <u>dadurch gekennzeichnet</u>, daß zwei Meßvorrichtungen an gegenüberliegenden Enden einer Verbindungsstange (71) angebracht sind und in einer Ebene der Stange um ihr Zentrum mit einer bekannten Winkelgeschwindigkeit rotieren.

13. Verwendung der Meßvorrichtung nach einem der vorhergehenden Ansprüche zur Bestimmung der Volumina der einzelnen in einer Flüssigkeitsmixtur vorhandenen Flüssigkeits-Komponenten, <u>dadurch gekennzeichnet</u>, daß bei gleichbleibender Geschwindigkeit der Strömung eine Änderung in Art und Amplitude des Anemometersignals, d. h. der thermischen Konduktivität, beobachtet wird, die proportional zu dem dann geänderten Volumen-Verhältnis ist.

## Claims

1. A gauge for measuring the velocity of fluid flows by means of a body, fully immersed in the fluid, which contains on its surface measuring devices operating by thermal principles while the body consists of thermally insulating material, said gauge comprising
   - a hydraulically smooth body with a a sharp leading edge,
   - a shape of the body such that a boundary layer evolves from the leading edge,
   - a sensor element (21) for measuring the wall shearing stress in the boundary layer by hot-film anemometry, placed flush on the surface of the body (27) at a fixed distance from the upstream edge within the boundary layer, and
   - the sensor element (21), being connected to electronics circuitry such that for the determination of the velocity of the flow at the leading edge from the sensor signal, the known basic hydrodynamic and heat transfer equations for characterization of the boundary-layer flows are used at the measuring position under consideration of the given fixed distance.

2. A gauge recited in claim 1, wherein the sensor element (21) is placed at a fixed distance from the sharp leading edge on a body surface shaped as a flat plate, whereby the other surface is connected to the sharp edge by a recessing bevel.

3. A gauge recited in claim 1, wherein a number of temperature sensor elements (20), surrounding sensor element (21), are placed flush with the surface of body (27) within the thermal wake of the heated sensor element (21).

4. A gauge recited in one of the previous claims, wherein the sensor element is connected via leads (24) to a bridge circuitry which maintains a constant temperature of the sensor element (21).

5. A gauge recited in one of the previous claims, wherein the sensor element is connected via leads (24) to a bridge circuitry which maintains a constant current through the sensor element (21).

6. A gauge recited in one of the previous claims, wherein the body (27) exhibits the shape of a rectangular plate.

7. A gauge recited in claim 1, wherein the body (27) exhibits the shape of a round plate.

8. A gauge recited in claim 1, wherein the body (27) exhibits the shape of a streamlined body with a leading edge facing the approaching fluid flow.

9. A gauge recited in claim 1, wherein the boundary layer evolves from a leading edge within a hollow geometry such as round or square tubes, for example.

10. A gauge recited in one of the previous claims, wherein the gauge rotates in a known spatial and temporal pattern relative to the velocity of the fluid flow.

11. A gauge recited in claim 10, wherein the gauge rotates with known angular velocity at a distance r around a central axis.

12. A gauge recited in claim 11, wherein two gauges placed at opposite ends of a connecting rod (71) rotate at a known angular velocity in the plane of rotation around their center.

13. Use of the gauge recited in one of the previous claims to determine the fractional volumes of individual fluid components comprising a fluid mixture, wherein for a constant velocity of the flow an observed change in characteristics and amplitude of the anemometer signal, that means, of the thermal conductivity, is proportional to a change in the volume ratio.

**Revendications**

1. Dispositif de mesure de la vitesse d'écoulement dans des courants de liquide, comprenant un corps dont l'ensemble du contour est disposé dans le courant de liquide et dont la surface comporte des organes de mesure reposant sur des principes thermiques, le corps étant en matériau isolant de la chaleur, caractérisé en ce que
    - le corps hydrauliquement lisse comporte une arête vive d'arrivée du courant,
    - le corps est conformé de manière qu'une couche limite apparaisse à partir de son arête d'arrivée du courant,
    - un élément détecteur (21) de mesure de l'effort de cisaillement de la paroi de la couche limite d'après le principe de l'anémomètre est disposé sur le corps (27) de manière qu'il soit à fleur de la surface de ce dernier et il est fixé à une distance définie de l'arête d'arrivée du courant à l'intérieur de la couche limite et
    - l'élément détecteur (21) est connecté à une électronique de sondage qui est conçue pour la détermination de la vitesse du courant sur l'arête d'arrivée de celui-ci à l'aide du signal du détecteur et sur la base d'équations fondamentales connues de l'hydrodynamique et du transfert de chaleur et qui décrivent la circulation de la couche limite au lieu de mesure en tenant compte de la distance définie.

2. Dispositif de mesure selon la revendication 1, caractérisé en ce que l'élément détecteur (21) est disposé à distance définie de l'arête vive d'arrivée du courant sur une surface du corps qui est plane à partir de l'arête vive d'arrivée du courant, l'autre surface arrivant jusqu'à l'arête vive d'arrivée du courant par l'intermédiaire d'un chanfrein formant un rétrécissement.

3. Dispositif de mesure selon la revendication 1, caractérisé par plusieurs éléments détecteurs de température (20) qui sont disposés autour de l'élément détecteur (21) sur le corps (27) de manière à arriver à fleur de sa surface, à l'intérieur du pavé thermique de l'élément détecteur chauffé (21).

4. Dispositif de mesure selon l'une des revendications précédentes, caractérisé en ce que la sonde de mesure est reliée par les conducteurs d'arrivée (24) à un circuit en pont de manière que la température de l'élément détecteur (21) puisse être maintenue à une valeur constante.

5. Dispositif de mesure selon l'une des revendications précédentes, caractérisé en ce que la sonde de mesure est reliée au moyen de conducteurs d'arrivée (24) à un circuit en pont de manière que le courant électrique passant par l'élément détecteur (21) puisse être maintenu à une valeur constante.

6. Dispositif de mesure selon l'une des revendications précédentes, caractérisé en ce que le corps (27) a la forme d'une plaque rectangulaire.

7. Dispositif de mesure selon la revendication 1, caractérisé en ce que le corps (27) a la forme d'une plaque ronde.

8. Dispositif de mesure selon la revendication 1, caractérisé en ce que le corps (27) a la forme d'un corps hydrodynamique comprenant une arête d'arrivée de courant qui est tournée vers l'arrivée de liquide.

9. Dispositif de mesure selon la revendication 1, caractérisé en ce que la couche limite apparaît à partir d'une arête d'arrivée de courant à l'intérieur d'une géométrie creuse, par exemple dans des tubes ronds ou tétragonaux.

10. Dispositif de mesure selon l'une des revendications précédentes, caractérisé en ce que le dispositif de mesure se déplace par rapport à la vitesse d'écoulement suivant un motif connu de course et de temps.

11. Dispositif de mesure selon la revendication 10, caractérisé en ce que le dispositif de mesure tourne avec une vitesse angulaire connue à une distance $\Delta r$ autour d'un axe central.

12. Dispositif de mesure selon la revendication 11, caractérisé en ce que deux dispositifs de mesure sont placés aux extrémités opposées d'une barre de liaison (71) et tournent avec une vitesse angulaire connue dans un plan de la barre, autour de son centre.

13. Utilisation du dispositif de mesure selon l'une des revendications précédentes pour la détermination des volumes des composants individuels liquides présents dans un mélange de liquides, caractérisée en ce qu'une variation du type et de l'amplitude du signal de l'anémomètre, c'est-à-dire de la conductivité thermique, est observée à vitesse constante du courant, cette variation étant proportionnelle au rapport de volumes qui est alors modifié.

FIG. 1

FLOW

FIG. 2a

FIG. 2b

FIG. 2

EP 0 427 018 B1

FLOW

FIG. 3

FIG. 4

FIG. 5

EP 0 427 018 B1

FIG. 6

FIG. 7